# EUROPEAN PATENT SPECIFICATION

(11) **EP 0 617 659 B1**
(45) Date of publication and mention of the grant of the patent: **21.02.1996**
(21) Application number: 93901481.7
(22) Date of filing: 18.12.1992
(51) Int. Cl.: B32B 5/06, B32B 27/00

(54) **LAMINATE AND PROCESS FOR ITS MANUFACTURE**
SCHICHTSTOFF UND VERFAHREN ZU SEINER HERSTELLUNG
STRATIFIE ET SON PROCEDE DE FABRICATION

(30) Priority: 20.12.1991 BE 9101170
(43) Date of publication of application: 05.10.1994
(73) Proprietor: EKON B.V., NL-6121 ER Born (NL)
(72) Inventor: BLOEMEN, Peter, Karel, Johannes, Maria, NL-6121 XC Born (NL)
(74) Representative: Geerts, Johanna Adriana Maria
(86) International application number: NL9200232
(87) International publication number: WO9312929

(56) References cited:
- EP-A- 0 284 714
- DE-U- 7 907 294
- FR-A- 2 041 216
- GB-A- 1 489 597
- NL-A- 6 712 331
- US-A- 3 354 020

## Description

The invention relates to a laminate comprising a thermoplastic film (A) that is provided with non-woven fibres that project from both sides of the film. In addition, the invention relates to a process for the manufacture of such a laminate.

Such a laminate is known from GB-A-1489597, which discloses a thermoplastic film that is provided with a layer of non-woven synthetic fibres on one side. These synthetic fibres are responsible for anchoring the film to a concrete body. Bonding is achieved by applying the thermoplastic film with the layer of non-woven fibres to wet concrete and then allowing time for setting.

A drawback of such a thermoplastic film is that it is generally too thin and cannot offer optimum protection to a substrate that is to be covered, for instance concrete. The adhesive strength of the thermoplastic film to the layer of non-woven synthetic fibres is low, so that the thermoplastic film can easily be pulled loose from the non-woven synthetic fibres when these are bonded to the concrete body.

Another drawback is that the risk of the thermoplastic film being torn or damaged is high, for example when a substrate, such as concrete, that is covered with such a thermoplastic film is subjected to mechanical or physical loads. During placement of the concrete mixture, for example, the thermoplastic film may easily be damaged. This may occur especially when the needle vibrator touches the thermoplastic film during vibration of the concrete mixture on a vibrating table.

A further drawback is that the thermoplastic film, when bonded to a substrate, cannot simply be provided with a relatively thick additional layer, for instance a second layer of thermoplastic material of a few mm thickness. Application of an additional layer of thermoplastic material will in this case have to take place by, for example, glueing. This gives a poor bond, and in the long run the additional layer of thermoplastic material will come loose from the film.

The aim of the invention is to provide a laminate comprising a thermoplastic film (A) provided with non-woven fibres for covering a substrate, for instance a concrete body, which does not possess the above-mentioned drawbacks.

According to the present invention this aim is achieved in that a subsequent layer of thermoplastic material (B) is applied to one side of the film, the non-woven fibres having been chosen such that they do not melt when the thermoplastic material (B) is applied, and the non-woven fibres at least partly having penetrated into and been bonded into the thermoplastic material (B). Thus, starting from a thermoplastic film (A) with non-woven fibres projecting from both sides, to one side of which film a subsequent layer of thermoplastic material (B) is applied, a laminate of sufficient thickness and strength is obtained which is particularly suitable for covering a substrate, for instance a concrete body.

In principle, any existing fibre that does not melt at the melting point of the thermoplastic material (B) can be used in the laminate according to the present invention. Examples of suitable fibres are natural fibres, synthetic fibres, metal fibres, carbon fibres, glass fibres or mixtures of these. Preferably, synthetic fibres are used. More particularly, use is made of such synthetic fibres that the melting point of the thermoplastic material (B) is lower than the melting point of the non-woven synthetic fibres.

Preferably, the melting point of the thermoplastic film (A) is also lower than the melting point of the non-woven synthetic fibres, and preferably the thermoplastic film (A) and the thermoplastic material (B) are of the same or virtually the same polymer composition. Thus, a laminate is obtained that can be anchored to a substrate, for example a concrete body, with a very good adhesive strength. The reason for this is that the thermoplastic film (A) is fused with the thermoplastic material (B), while the non-woven fibres are fully enclosed by and anchored into on the one hand the thermoplastic material (B) and on the other the concrete body.

A thermoplastic film with fibres projecting from both sides as a non-woven is understood to be a thermoplastic film, for example 0.05-1 mm thick and preferably 0.1-0.5 mm thick, provided with non-woven fibres that project from both sides of the film, so that on both sides of the film a shaggy layer of short, protruding fibres is formed. The fibres form part of a non-woven structure. This is a fabric built up from short fibres, for example 10-100 mm long and preferably 25-75 mm long, which are mechanically, thermally or chemically connected and optionally provided with extra reinforcement in between them by means of a fibre reinforcement agent, for example a resin layer. To obtain a film with non-woven fibres projecting from both sides use is made of a technique known in itself, which usually comprises needle-punching a layer of non-woven fibres through the film using a tabletop provided with needles.

The thermoplastic film (A) and the thermoplastic material (B) may consist of any conceivable thermoplastic synthetic composition. Examples are polyamides, polyesters, polyolefines, or mixtures of these. Preferably, the polymer composition consists of at least a polyolefine such as low-density polyethylene (LDPE), high-density polyethylene (HDPE), polypropylene (PP), copolymers of ethylene and/or propylene, or mixtures of these. Advantages of such a polymer composition in the application of a laminate according to the present invention for covering a substrate such as concrete are, for example, the good chemical resistance properties, the long service life of the material in an aggressive environment, the high quality of the means of connecting strips and or sheets, for example by means of welding, the relatively low melting point, the relatively simple possibilities of fusing the thermoplastic film (A) and the thermoplastic material (B), and the damp-proofing properties.

More preferably, the laminate according to the invention consists of a polymer composition recycled from waste material, more particularly a polyolefine, and most preferably polyethylene. The advantage of the use of a polymer composition recycled from waste material is that the amount of such plastic waste, and thus its environmental effect, is reduced.

The synthetic fibres in the non-woven consist of a polymer composition, preferably a polymer composition recycled from waste material, with preferably a relatively high melting point, for example a polyamide or polyester, which is not essentially affected by chemical substances in the substrate to be covered, such as a concrete body, does not substantially age and is capable of good mechanical bonding to the substrate. If the substrate to be covered is a concrete body, it is advantageous for the synthetic fibres to be hydrophobic. During setting of the concrete this will ensure that no water film remains on the synthetic fibres. If such a layer of water does remain behind on the synthetic fibres, for example because they are hydrophilic or non-hydrophobic, then the concrete around the synthetic fibres cannot set as concrete and a local cement layer is formed, which will diminish the strength of the bond of the laminate to the concrete substrate. The melting point of the non-woven synthetic fibres is higher than that of the polymer composition of the thermoplastic film (A) and the thermoplastic material (B). As a result, during fusion of the thermoplastic film (A) and the thermoplastic material (B) the non-woven synthetic fibres penetrate at least into the top layer of the thermoplastic material (B) and are enclosed without they themselves being substantially melted, so that maximum bonding is achieved between the thermoplastic film (A) and the non-woven synthetic fibres on the one hand and the thermoplastic material (B) on the other.

Another suitable embodiment is a laminate in which the thermoplastic material (B) is on both sides provided with a thermoplastic film (A,A'), which films are provided with non-woven fibres that project from both sides of these films. Such a laminate is eminently suited for use as a damp-proof course in a concrete wall, the laminate being present in between two layers of concrete.

The invention also relates to a process for the manufacture of a laminate according to the present invention.

The process according to the present invention is characterised in that at least a thermoplastic film (A) provided with non-woven fibres that project from both sides of the film is rolled and/or pressed onto a layer of thermoplastic material (B) under such conditions that the fibres do not melt, the non-woven fibres penetrating at least partly into the thermoplastic material (B) and being bonded into it. Preferably, this involves fusion of the thermoplastic film (A) and the thermoplastic material (B). This ensures that during fusion of the thermoplastic film (A) and the thermoplastic material (B) the non-woven fibres on one side of the thermoplastic film (A) are pressed in between the film and the thermoplastic material (B), so that the non-woven fibres penetrate at least into the top layer of the thermoplastic material (B) and are enclosed there. This not only gives maximum bonding between the thermoplastic film (A) and the thermoplastic material (B), it also ensures that the non-woven structure on the other side of the thermoplastic film (A), the side to be bonded to a substrate, will remain intact.

More in particular at least a thermoplastic film (A) provided with non-woven fibres that project from both sides of the film is rolled and/or pressed onto the plastic, hot mass during the production of a layer of thermoplastic material (B). This way it is ensured that the laminate according to the present invention is manufactured in the most efficient and economic manner already during production of one of its component parts.

A further advantage of the process according to the present invention is that there is freedom as regards the way the desired thickness of the layer of thermoplastic material (B) is obtained, depending on the desired application, and this implies that there is also freedom as regards the desired thickness of the laminate according to the present invention, which may for example range from 0.5 to 50 mm, and preferably from 1 to 30 mm.

The process according to the present invention makes it possible to manufacture a laminate essentially consisting of a layer of thermoplastic material (B), which may be relatively thick or not, with at least on one side a non-woven structure, the fibres of which have partly penetrated at least into the top layer of the thermoplastic material (B) and are bonded into that layer, with a thermoplastic film (A) being laminated through fusion on the same side.

Such a laminate is eminently suitable for covering and protecting a substrate such as concrete, metal or wood against the action of certain substances, for example aggressive liquids, solids and gases, or condensed water, which can normally attack the substrate or cause it to wear down, for example due to erosion. Application of such a laminate can take place in, for example, all concrete spaces in which liquids and/or solids and/or gases are permanently or temporarily present, for example for storage, transshipment, mixing, transfer, transport and similar purposes. A laminate according to the present invention can be applied to any conceivable type of fresh concrete, for example wet concrete, air concrete, shotconcrete or concrete in which recycled material is used. As soon as the concrete has set, the laminate is bonded to it. It is also possible to provide old concrete with a suitable glue or cement layer and apply a laminate according to the present invention to this layer.

The laminate can be applied in a mould with the non-woven side facing the side where the concrete will come. This can be done for example by means of a prefab system or construction of a mould on the location where the space is to be created. For renovation of existing spaces use can be made of a type of boards that are placed against the old wall and that are fixed by means of screws, rods and the like. The boards may in advance have been provided with a laminate according to the present invention, or they may serve as mould for later concrete placement for a wall.

The strips of a laminate according to the present invention are to be joined in such a way as to exclude all moisture and vapour, for example by welding, glueing or other techniques. This may take place before or after application of the laminate to the substrate, for example in the case of a concrete body before or after placement of the concrete mixture.

Using the process according to the present invention it is also possible to manufacture a laminate with a non-woven structure being applied to both sides of a layer of thermoplastic material (B). This is achieved by rolling and/or pressing, optionally simultaneously, a thermoplastic film (A,A') provided with non-woven fibres onto both sides of a layer of thermoplastic material (B). In this process, too, it is advantageous to roll and/or press the two thermoplastic films (A,A') simultaneously onto the plastic, hot mass during the production of a layer of thermoplastic material (B).

The invention will be elucidated on the basis of the following figures and examples, without being limited thereto.
Figure 1 is a cross section of a laminate;
Figure 2 represents a process in which a thermoplastic film (A) provided with non-woven fibres that project from both sides of the film are rolled and/or pressed onto the plastic, hot mass during the production of a layer of thermoplastic material (B).

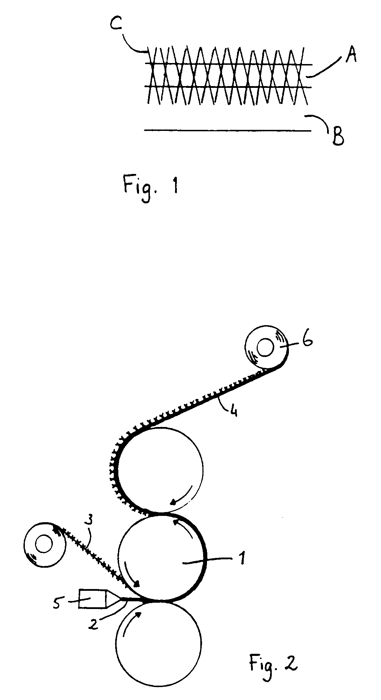

In Figure 1, "A" is the thermoplastic film provided with non-woven fibres "C" that project from both sides of film (A). As a result, on both sides of film (A) a shaggy layer of non-woven fibres "C" is obtained. A subsequent layer of thermoplastic material (B) is applied to one side of film (A) so that the non-woven fibres "C" have penetrated into and are bonded into the top layer of thermoplastic material (B). The figure as a whole represents a laminate of a few mm thickness with on one side non-woven fibres that have penetrated into and are bonded into the laminate.

In Figure 2, 1 represents three rolls. Extruder 5 produces a plastic, hot mass 2, onto which a thermoplastic film 3, provided with non-woven fibres that project from both sides of the film, is rolled and/or pressed. This results in a laminate 4, which is provided on one side with non-woven fibres that have partly penetrated into the laminate and have been bonded into it. The resulting laminate is rolled up (6).

## Claims

1. Laminate, comprising a thermoplastic film (A) provided with non-woven fibres that project from both sides of the film, characterised in that a subsequent layer of thermoplastic material (B) is applied to one side of the film, the non-woven fibres being chosen such that they do not melt upon application of the thermoplastic material (B), and the non-woven fibres having at least partly penetrated into and been bonded into the thermoplastic material (B).

2. Laminate according to claim 1, characterised in that the fibres are non-woven synthetic fibres.

3. Laminate according to claim 2, characterised in that the melting point of the thermoplastic material (B) is lower than the melting point of the non-woven synthetic fibres.

4. Laminate according to claim 3, characterised in that the melting point of the thermoplastic film (A) is lower than the melting point of the non-woven synthetic fibres.

5. Laminate according to any one of claims 1-4, characterised in that the thermoplastic film (A) is between 0.05 and 1 mm thick.

6. Laminate according to any one of claims 1-5, characterised in that the thermoplastic material (B) is between 0.5 and 50 mm thick.

7. Laminate according to any one of claims 1-6, characterised in that the length of the non-woven fibres is between 10 and 100 mm.

8. Laminate according to any one of claims 1-7, characterised in that the thermoplastic film (A) and the thermoplastic material (B) are of the same or virtually the same polymer composition.

9. Laminate according to any one of claims 1-8, characterised in that at least the thermoplastic film (A), the thermoplastic material (B) or the non-woven synthetic fibres consist of a polymer composition recycled from waste material.

10. Laminate according to any one of claims 1-9, characterised in that the thermoplastic film (A) and/or the thermoplastic material (B) consist of at least a polyolefine.

11. Laminate according to claim 10, characterised in that the polyolefine is a polyolefine recycled from waste material.

12. Laminate according to claim 10 or claim 11, characterised in that the polyolefine is polyethylene recycled from waste material.

13. Laminate according to any one of claims 1-12, characterised in that the thermoplastic material (B) is provided on both sides with a thermoplastic film (A,A'), which films are provided with non-woven fibres that project from both sides of each film.

14. Process for the manufacture of a laminate according to any one of claims 1-13, characterised in that at least a thermoplastic film (A) provided with non-woven fibres that project from both sides of the film is rolled and/or pressed onto a layer of thermoplastic material (B) under such conditions that the fibres do not melt, the non-woven fibres at least partly penetrating and being bonded into the thermoplastic material (B).

15. Process according to claim 14, characterised in that at least a thermoplastic film (A), provided with non-woven fibres that project from both sides of the film, is rolled and/or pressed onto the plastic, hot mass during the production of a layer of thermoplastic material (B).

16. Process according to claim 14 or 15, characterised in that the thermoplastic film (A) is fused with the thermoplastic material (B).

17. Object provided with a laminate obtained according to any one of claims 1-13.

18. Concrete product provided with a laminate obtained according to any one of claims 1-13.

## Patentansprüche

1. Laminat mit einer thermoplastischen Folie (A), die mit ungewebten Fasern versehen ist, welche von beiden Seiten der Folie abstehen, dadurch gekennzeichnet, daß eine nachfolgende Schicht eines thermoplastischen Materials (B) auf eine Seite der Folie aufgebracht ist, wobei die ungewebten Fasern so ausgewählt sind, daß sie beim Aufbringen des thermoplastischen Materials (B) nicht schmelzen, und die ungewebten Fasern zumindest teilweise in das thermoplastische Material (B) eingedrungen und in diesem eingebunden sind.

2. Laminat nach Anspruch 1, dadurch gekennzeichnet, daß die Fasern ungewebte synthetische Fasern sind.

3. Laminat nach Anspruch 2, dadurch gekennzeichnet, daß der Schmelzpunkt des thermoplastischen Materials (B) niedriger als der Schmelzpunkt der ungewebten synthetischen Fasern ist.

4. Laminat nach Anspruch 3, dadurch gekennzeichnet, daß der Schmelzpunkt der thermoplastischen Folie (A) niedriger als der Schmelzpunkt der ungewebten synthetischen Fasern ist.

5. Laminat nach einem der Ansprüche 1 bis 4, dadurch gekennzeichnet, daß die thermoplastische Folie (A) zwischen 0,05 und 1 mm dick ist.

6. Laminat nach einem der Ansprüche 1 bis 5, dadurch gekennzeichnet, daß das thermoplastische Material (B) zwischen 0,5 und 50 mm dick ist.

7. Laminat nach einem der Ansprüche 1 bis 6, dadurch gekennzeichnet, daß die Länge der ungewebten Fasern zwischen 10 und 100 mm beträgt.

8. Laminat nach einem der Ansprüche 1 bis 7, dadurch gekennzeichnet, daß die thermoplastische Folie (A) und das thermoplastische Material (B) dieselbe oder praktisch dieselbe Polymerzusammensetzung aufweisen.

9. Laminat nach einem der Ansprüche 1 bis 8, dadurch gekennzeichnet, daß zumindest die thermoplastische Folie (A), das thermoplastische Material (B) oder die ungewebten synthetischen Fasern aus einer aus Abfallmaterial rezyklierten Polymerzusammensetzung bestehen.

10. Laminat nach einem der Ansprüche 1 bis 9, dadurch gekennzeichnet, daß die thermoplastische Folie (A) und/oder das thermoplastische Material (B) aus mindestens einem Polyolefin bestehen.

11. Laminat nach Anspruch 10, dadurch gekennzeichnet, daß das Polyolefin ein aus Abfallmaterial rezykliertes Polyolefin ist.

12. Laminat nach Anspruch 10 oder 11, dadurch gekennzeichnet, daß das Polyolefin aus Abfallmaterial rezykliertes Polyethylen ist.

13. Laminat nach einem der Ansprüche 1 bis 12, dadurch gekennzeichnet, daß das thermoplastische Material (B) an beiden Seiten mit einer thermoplastischen Folie (A, A') versehen ist, welche Folien mit ungewebten Fasern versehen sind, welche von beiden Seiten jeder Folie abstehen.

14. Verfahren zur Herstellung eines Laminats nach einem der Ansprüche 1 bis 13, dadurch gekennzeichnet, daß zumindest eine thermoplastische Folie (A), die mit ungewebten, von beiden Seiten der Folie abstehenden Fasern versehen ist, auf die Schicht aus thermoplastischem Material (B) unter derartigen Bedingungen gewalzt und/oder gepreßt wird, daß die Fasern nicht schmelzen, wobei die ungewebten Fasern zumindest teilweise in das thermoplastische Material (B) eindringen und darin gebunden werden.

15. Verfahren nach Anspruch 14, dadurch gekennzeichnet, daß zumindest eine thermoplastische Folie (A), die mit von beiden Seiten der Folie abstehenden ungewebten Fasern versehen ist, während der Herstellung einer Schicht aus thermoplastischem Material (B) auf die plastische, heiße Masse gewalzt und/oder gepreßt wird.

16. Verfahren nach Anspruch 14 oder 15, dadurch gekennzeichnet, daß die thermoplastische Folie (A) mit dem thermoplalstischen Material (B) verschmolzen wird.

17. Gegenstand, der mit einem nach einem der Ansprüche 1 bis 13 erhaltenen Laminat versehen ist.

18. Betonprodukt, das mit einem nach einem der Ansprüche 1 bis 13 erhaltenen Laminat versehen ist.

## Revendications

1. Stratifié comprenant un film thermoplastique (A) garni de fibres non- tissées qui dépassent des deux côtés du film, caractérisé en ce que l'on applique une couche ultérieure de matériau thermoplastique (B) d'un côté du film, les fibres non-tissées étant choisies de telle sorte qu'elles ne fondent pas lors de l'application du matériau thermoplastique (B), et les fibres non-tissées ayant au moins partiellement pénétré dans le matériau thermoplastique (B) et y étant liées.

2. Stratifié selon la revendication 1, caractérisé en ce que les fibres sont des fibres synthétiques non-tissées.

3. Stratifié selon la revendication 2, caractérisé en ce que le point de fusion du matériau thermoplastique (B) est inférieur au point de fusion des fibres synthétiques non tissées.

4. Stratifié selon la revendication 3, caractérisé en ce que le point de fusion du film thermoplastique (A) est inférieur au point de fusion des fibres synthétiques non-tissées.

5. Stratifié selon l'une quelconque des revendications 1 à 4, caractérisé en ce que le film thermoplastique (A) a une épaisseur comprise entre 0,05 et 1 mm.

6. Stratifié selon l'une quelconque des revendications 1 à 5, caractérisé en ce que le matériau thermoplastique (B) a une épaisseur comprise entre 0,5 et 50 mm.

7. Stratifié selon l'une quelconque des revendications 1 à 6, caractérisé en ce que la longueur des fibres non-tissées est comprise entre 10 et 100 mm.

8. Stratifié selon l'une quelconque des revendications 1 à 7, caractérisé en ce que le film thermoplastique (A) et le matériau thermoplastique (B) ont la même ou pratiquement la même composition de polymère.

9. Stratifié selon l'une quelconque des revendications 1 à 8, caractérisé en ce qu'au moins le film thermoplastique (A), le matériau thermoplastique (B) ou les fibres synthétiques non-tissées se composent d'une composition de polymère provenant de recyclage de déchets.

10. Stratifié selon l'une quelconque des revendications 1 à 9, caractérisé en ce que le film thermoplastique (A) et/ou le matériau thermoplastique (B) se composent d'au moins une polyoléfine.

11. Stratifié selon la revendication 10, caractérisé en ce que la polyoléfine est une polyoléfine provenant du recyclage de déchets.

12. Stratifié selon la revendication 10 ou 11, caractérisé en ce que la polyoléfine est du polyéthylène provenant du recyclage de déchets.

13. Stratifié selon l'une quelconque des revendications 1 à 12, caractérisé en ce que le matériau thermoplastique (B) est pourvu des deux côtés d'un film thermoplastique (A, A'), ces films étant garnis de fibres non-tissées qui dépassent des deux côtés de chaque film.

14. Procédé pour la fabrication d'un stratifié selon l'une quelconque des revendications 1 à 13, caractérisé en ce que l'on enroule et/ou comprime au moins un film thermoplastique (A) garni de fibres non-tissées qui dépassent des deux côtés du film, sur une couche de matériau thermoplastique (B) dans des conditions telles que les fibres ne fondent pas, les fibres non-tissées pénétrant au moins partiellement dans le matériau thermoplastique (B) et y étant liées.

15. Procédé selon la revendication 14, caractérisé en ce que l'on enroule et/ou comprime au moins un film thermoplastique (A), garni de fibres non-tissées qui dépassent des deux côtés du film, sur la masse plastique chaude au cours de la production d'une couche du matériau thermoplastique (B).

16. Procédé selon la revendication 14 ou 15, caractérisé en ce que le film thermoplastique (A) est fondu avec le matériau thermoplastique (B).

17. Objet muni d'un stratifié obtenu selon l'une quelconque des revendications 1 à 13.

18. Produit en béton muni d'un stratifié obtenu selon l'une quelconque des revendications 1 à 13.
